# EUROPEAN PATENT APPLICATION

(11) **EP 3 845 098 A1**
(43) Date of publication of application: **07.07.2021**
(21) Application number: 19220136.6
(22) Date of filing: 30.12.2019
(51) Int. Cl.: A47J 31/42, A47J 42/50

(54) **A COFFEE MACHINE AND A COFFEE BEANS CONTAINER FOR A COFFEE MACHINE**

(71) Applicant: BSH Hausgeräte GmbH, 81739 München (DE)
(72) Inventor: Koch, Franz, 83454 Anger (DE); Ogrizek, Bostjan, 3320 Velenje (SI); Semprimoznik, Ales, 3330 Mozirje (SI)

(57) **Abstract**

A coffee machine and a coffee beans container (10) for a coffee machine comprising a coffee beans detection device which is an optical sensor comprising a light sending module (14) and a light receiving module (15) wherein the coffee beans container (10) has a first light permeable element (12) and a second light permeable element (13) which are integrally mounted with the coffee beans container walls (11) and which are provided to equalize a light rays (16).

## Description

### Background of the invention

The present invention relates to a coffee beans container for a coffee machine comprising a coffee beans detection device which is an optical sensor comprising a light sending module and a light receiving module. The present invention also relates to a coffee machine having such coffee beans container.

### State of the art

In the state of the art a coffee beans containers with the coffee beans detection devices are known. The coffee beans detection devices are provided to detect the absence of beans in the container or to detect that the lowest level of the coffee beans inside the container has been reached. The common detection devices usually comprise an optical sensor with a light sending and receiving modules or a capacitive sensor which detects the beans level inside the beans container. The optical systems have considerable drawbacks due to the fact that the environment wherein they have to work is full of coffee powders or debris preventing the optical sensor from correct operation.
The principle of operation of the optical sensors is based on sending a beam of light by a transmitter and receiving it by a receiver. This sensor reacts to objects cutting through the beam between the transmitter and the receiver or to the beam reflected from the object. Such sensors are used to determine the level of liquids and loose materials, to control the position of moving parts of machines and to identify objects within the range of the sensors.

The patent application EP 1 440 641 A1 discloses the coffee maker which has a fresh coffee bean container with an output shaft delivering the coffee beans to a grinder, the base of the coffee bean container being transparent in the vicinity of the output shaft and a photoelectric transducer, e.g. a photodiode, positioned beneath the transparent base, for providing a signal when the coffee bean container is empty. The interior of the coffee bean container can be illuminated by an IR light source, the photoelectric transducer detecting the IR light.

The patent application DE 102 01 768 A1 discloses a coffee or tea maker which has a container with a liquid or material level sensor comprising a transmitter and a receiver for detection of radiation transmitted by the transmitter. The wall of the container is at least partially transparent in the area of the transmitted beam. The document also discloses a dosing device for a coffee or tea maker with a liquid or material level sensor that words with both liquid and powder products. If the container for the agent is full above a minimum level then no signal will be received by the detector. Only when the level falls below the minimum will a signal be detected, said signal then being used to trigger a warning light, etc.

Presented solutions do not provide a reliable solution for detecting the level of the coffee beans inside the coffee beans container of the coffee machine.

### The aim of the invention

It is the object of the present invention to provide a further development with an advantage over the state of the art and provide a coffee beans container with a coffee beans detection device which detects the level of the coffee beans in reliable and easy way by providing effective transmission of the light signal form the light source to the light receiver.

### Summary of the invention

The object is solved by a coffee beans container for a coffee machine wherein the coffee beans container has a first light permeable element and a second light permeable element which are integrally mounted in the coffee beans container walls and which are provided to equalize a light rays.
Typically, the automatic coffee machines include a coffee bean container for storing coffee beans. The coffee beans container is a part of the coffee machine in which the coffee beans are stored to be grinded in order to prepare a coffee drink. Usually, the coffee beans container is equipped with a cover which prevents the aroma from escaping the container. The coffee beans container is filled with roasted coffee beans and closed with the cover by the user. The coffee beans container is an integral part of the coffee machine body.
The coffee beans container has a first light permeable element and a second light permeable element. The first light permeable element and the second light permeable element are simple elements made out of the light permeable material e.g. plastic which allows the light rays to pass through the elements. The first light permeable element and the second light permeable element are integrally mounted in the coffee beans container walls what means that the elements are inserted into fixing holes placed on the coffee beans container walls during mounting process on the assembly line. The elements are inserted into the coffee beans container walls what means that the elements are fixed with the coffee beans container.
The first light permeable element is provided to redirect a light rays which are sending from a light sending module. The light sending module is a light source which is placed outside the coffee beans container. After sending the light rays from the sending module the light rays pass through the first light permeable element and are equalized to be parallel in order to detect the coffee beans level efficiently.
The first light permeable element and the second light permeable element are provided also because the coffee beans container is often made out of a material which is opaque and which is not able to let the light rays go through the coffee bean container walls. Additionally, the coffee beans container walls have different shapes and very often are not even and therefore the light rays are reflected by the walls in different directions which has a negative influence on the coffee beans presence detection effect.

In an embodiment of the invention the first light permeable element and the second light permeable element are a lens of a circular shape. The shape of the first and the second light permeable elements are the same. The shape is circular and the surface of the permeable elements are convex to act as a lens which changes the light rays in desired way i.e. equalizes the light rays which travel from the light sending module to the light receiving module through the coffee beans container. Equalization of the light rays makes the detection of the coffee beans inside the coffee beans container more precise end efficient what is beneficial for the consumer.

In the preferred embodiment of the invention the first light permeable element and the second light permeable element are placed on the opposite walls of the coffee beans container at the same height what means that the position of the first and the second light permeable elements is designed symmetrically. The positive effect is that light rays which are sent by the light sending module and which goes through the first light permeable element reaches the second light permeable element and the light receiving module in fast and effective way.

In another embodiment of the invention the first light permeable element and the second light permeable element are placed at the minimum level of the coffee beans in the coffee beans container. The purpose of placing the first and the second light permeable elements at the minimum level of the coffee beans in the coffee beans container is that even a small amount of the coffee beans which left in the coffee beans container is possible to be detected by the light rays which is desirable function for the user.

Advantageously, the first light permeable element is placed in the vicinity of the light sending module and the second light permeable element is placed in the vicinity of the light receiving module. To provide a reliable solution the first light permeable element is placed in the vicinity of the light sending module. The distance between the light sending module and the first light permeable element is small in order to deliver as much light rays from the light sending module to the first light permeable element as possible.

The object of the invention is also solved by a coffee machine comprising a coffee beans container with a coffee beans detection device described above. The coffee machine is an automatic device in which most of the processes are performed in automatic way without involvement of the user.

### Brief description of the figures

Further details of embodiments of the invention together with additional objects and corresponding advantages will be best understood from the following description of specific embodiments and in connection with the accompanying drawings.

In the drawing:
- Fig. 1: shows a coffee beans container in isometric view;
- Fig. 2: shows a part of the coffee beans container with a first light permeable element in isometric view;
- Fig. 3: shows the coffee beans container cross section.

### Detailed description of the invention

With reference to the attached drawing, the technical contents and detailed description of the present invention are describe thereinafter according to a preferable embodiment being not used to limit its executing scope. Any equivalent variation and modification made according to the appended claims is also covered by the claims claimed by the present invention.

In the following description of the preferred embodiment s of the present invention, similar identical reference numbers designate identical or comparable components.

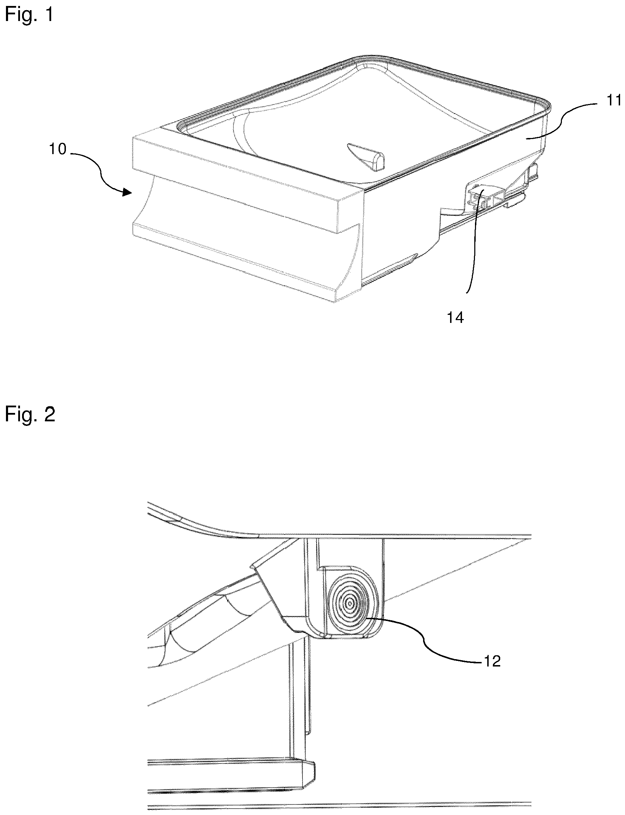

Fig. 1 shows a coffee beans container 10 in isometric view. The coffee beans container 10 is a simple receptacle of a substantially rectangular shape for storing the coffee beans. The coffee beans container 10 is a part of a coffee machine (not shown on the figure) and is integrally mounted with the coffee machine body. The walls 11 of the coffee beans container 10 are inclined and its shape is not regular.

Fig. 2 shows a part of the coffee beans container 10 with a first light permeable element in isometric view. The coffee beans container 10 is provided with a first light permeable element 12 through which the light enters the coffee beans container 10 in order to detect the coffee beans presence inside the container. The first light permeable element 12 is an element made out of a transparent material as glass or plastic in order to let the light beam to pass it through. The shape of the first light permeable element 12 is circular. The shape of the first light permeable element 12 is designed in such a way to make the light rays 16 beam focused in order to detect the presence of the beans inside the coffee beans container 10 efficiently.

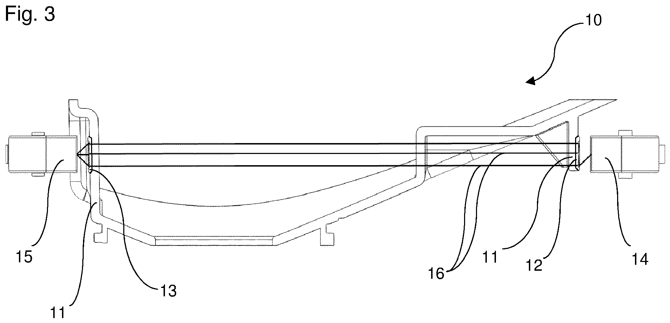

Fig. 3 shows the coffee beans container 10 cross section. The coffee beans container 10 has walls 11 which are equipped with a first light permeable element 12 and the second light permeable element 13. The first light permeable element 12 and the second light permeable element 13 are mounted into the walls 11 on the opposite sides of the coffee beans container 10 and at the same height. The first light permeable element 12 is placed in the vicinity of the light sending module 14 which is mounted into the coffee machine body (not shown on the figure). The second light permeable element 13 is placed in the vicinity of the light receiving module 15 which is mounted also into the coffee machine body. The light signal is generated by the light sending module 14 and the light rays are sending through the first light permeable element 12. The first light permeable element 12 is a small element of a lens shape and function which changes the light characteristics to make the light beams focused and therefore detect the presence of the coffee beans inside the coffee beans more efficient in comparison to the diffused light rays.

### REFFERENCE SIGNS

- 10: coffee beans container
- 11: walls
- 12: first light permeable element
- 13: second light permeable element
- 14: light sending module
- 15: light receiving module
- 16: light rays

## Claims

1. A coffee beans container (10) for a coffee machine comprising a coffee beans detection device which is an optical sensor comprising a light sending module (14) and a light receiving module (15) **characterized in that** the coffee beans container (10) has a first light permeable element (12) and a second light permeable element (13) which are integrally mounted with the coffee beans container walls (11) and which are provided to equalize a light rays (16).

2. The coffee beans container (10) according to claim 1, **characterized in that** the first light permeable element (12) and the second light permeable element (13) are a lens of a circular shape.

3. The coffee beans container (10) according any of the preceding claims, **characterized in that** the first light permeable element (12) and the second light permeable element (13) are placed on the opposite walls (11) of the coffee beans container (10).

4. The coffee beans container (10) according to any of the preceding claims, **characterized in that** the first light permeable element (12) and the second light permeable element (13) are placed at the same height.

5. The coffee beans container (10) according to any of the preceding claims, **characterized in that** the first light permeable element (12) and the second light permeable element (13) are placed at the minimum level of the coffee beans in the coffee beans container (10).

6. The coffee beans container (10) according to any of the preceding claims, **characterized in that** the first light permeable element (12) is placed in the vicinity of the light sending module (14).

7. The coffee beans container (10) according to any of the preceding claims, **characterized in that** the second light permeable element (13) is placed in the vicinity of the light receiving module (15).

8. A coffee machine comprising a coffee beans container (10) with a coffee beans detection device according to any of the preceding claims.
